# EUROPEAN PATENT SPECIFICATION

(11) **EP 2 838 799 B1**
(45) Date of publication and mention of the grant of the patent: **11.04.2018**
(21) Application number: 12866751.6
(22) Date of filing: 10.09.2012
(51) Int. Cl.: B65B 25/06, A23L 13/00, A23B 4/16

(54) **METHOD FOR MAINTAINING RED MEAT**
VERFAHREN ZUR AUFBEWAHRUNG VON ROTEM FLEISCH
PROCÉDÉ PERMETTANT DE CONSERVER LA VIANDE ROUGE

(30) Priority: 25.01.2012 US 201261590756 P; 06.03.2012 US 201261607258 P; 11.05.2012 US 201261646076 P; 31.08.2012 US 201213601881
(43) Date of publication of application: 25.02.2015
(73) Proprietor: Global Fresh Foods, Mountain View, California 94043 (US)
(72) Inventor: BELL, Laurence D., Pacific Grove, CA 93950 (US)
(74) Representative: Gibson, Mark
(86) International application number: PCT/US2012/054476
(87) International publication number: WO 2013/112202

(56) References cited:
- EP-A1- 0 894 720
- WO-A1-97/36504
- US-A- 3 574 642
- US-A- 3 939 624
- US-A- 4 522 835
- US-A- 5 529 178
- US-A1- 2005 003 059
- SORHEIM O ET AL: "Colour of ground beef as influenced by raw materials, addition of sodium chloride and low oxygen packaging", MEAT SCIENCE, ELSEVIER SCIENCE, GB, vol. 81, no. 3, 1 March 2009 (2009-03-01), pages 467-473, XP025760894, ISSN: 0309-1740, DOI: 10.1016/J.MEATSCI.2008.09.010 [retrieved on 2008-10-02]
- MANCINI R A ET AL: "Current research in meat color", MEAT SCIENCE, ELSEVIER SCIENCE, GB, vol. 71, no. 1, 1 September 2005 (2005-09-01), pages 100-121, XP027770658, ISSN: 0309-1740 [retrieved on 2005-09-01]
- ODDVIN SØRHEIM ET AL: "The storage life of beef and pork packaged in an atmosphere with low carbon monoxide and high carbon dioxide", MEAT SCIENCE, vol. 52, no. 2, 1 June 1999 (1999-06-01), pages 157-164, XP055209431, ISSN: 0309-1740, DOI: 10.1016/S0309-1740(98)00163-6
- MCMILLIN ET AL: "Where is MAP Going? A review and future potential of modified atmosphere packaging for meat", MEAT SCIENCE, ELSEVIER SCIENCE, GB, vol. 80, no. 1, 1 September 2008 (2008-09-01), pages 43-65, XP022795732, ISSN: 0309-1740, DOI: 10.1016/J.MEATSCI.2008.05.028 [retrieved on 2008-06-24]
- M JAKOBSEN ET AL: "The use of CO2 in packaging of fresh red meats and its effect on chemical quality changes in the meat: a review.", JOURNAL OF MUSCLE FOODS, vol. 13, no. 2, 1 January 2002 (2002-01-01), pages 143-168, XP055209482, US ISSN: 1046-0756

## Description

### TECHNICAL FIELD

This invention relates to methods and processes for preparing, packaging and preserving red meat, especially maintaining the freshness and color of the meat.

### BACKGROUND

The storage-life of oxidatively-degradable meats such as red meat is limited in the presence of a normal atmospheric environment. The presence of oxygen at levels found in a normal atmospheric environment leads to changes in odor, flavor, color, and texture resulting in an overall deterioration in quality of the meat either by chemical effect or by growth of aerobic spoilage microorganisms.

Modified atmosphere packaging (MAP) has been used to improve storage-life and safety of stored red meats by inhibition of spoilage microorganisms and pathogens. MAP is the replacement of most of the normal atmospheric environment in a food storage pack with a single inert gas or a mixture of inert gases. The resulting gas in a MAP mixture is most often combinations of nitrogen (N₂) and carbon dioxide (CO₂) with a small amount of oxygen (O₂). In most cases, the bacteriostatic effect is obtained by a combination of decreased O₂ and increased CO₂ concentrations. Farber, J. M. 1991. Microbiological aspects of modified-atmosphere packaging technology: a review. J. Food Protect. 54:58-70.

US Patent Application Publication Nos. 2008/0003334, 2011/0151070 and 2011/0151084, and International Application WO 2011/053676 provide methods and systems of preserving oxidatively-degradable meats in containers, such as totes, having an atmosphere that is low in O₂, and in some embodiments, high in CO₂. These methods and systems have demonstrated uniquely extended shelf life after removal from the "Controlled" atmosphere compared to conventional MAP and Vacuum packaging technologies. Each of these publications is individually incorporated by reference in its entirety.

Notwithstanding the benefits imparted by these methods and systems, red meats often undergo discoloration in a few hours to a few days after packaging. Specifically, red meats, such as ground beef, will quickly turn to a "brownish" color which is perceived by the consumer to be as not fresh.

Without being limited to any theory, discoloration of consumable red meat is caused, in part, by denaturation of the myoglobin protein by spoilage organisms, desiccation and other deteriorative processes. Accordingly, it would be beneficial if methods were developed which would allow for retention of the natural color of red meat.

US 4,522,835 discloses a method of maintaining color in fresh meat, poultry and fish by exposing said meat, poultry and fish to an atmosphere of low oxygen followed by an atmosphere containing a small amount of carbon monoxide.

### SUMMARY OF THE INVENTION

The invention provides a method to inhibit discoloration of red meat, which method comprises:
(1) reducing the oxygen concentration in the atmosphere of a sealed container containing red meat to no more than about 5 % v/v to obtain an inert gas atmosphere by replacing at least a portion of the atmosphere in the sealed container with a nitrogen flush;
(2) after the nitrogen flush, introducing at least 40 vol. % exogenous carbon dioxide into the container while retaining or further reducing the oxygen concentration in the atmosphere of the container to less than 1500 ppm by operation of a fuel cell so as to inhibit the discoloration of the red meat; and
(3) optionally transferring the red meat into a package with limited gas permeability;
wherein the atmosphere of the container comprises an inert gas atmosphere which excludes carbon monoxide and comprises at least 90 vol% carbon dioxide after completion of step (2). This invention is predicated, in part, on the unexpected discovery that modification of the deoxygenation protocols used to stabilize the freshness of red meat leads to significantly improved color retention in the meat. In particular, the meat is deoxygenated by removing the enclosed oxygen above and around the meat by employing an oxygen remover, such as fuel cell(s) which convert the oxygen in the air to water vapor, leaving an air with an inert gas atmosphere comprising substantially nitrogen, or by removing the enclosed air above and around the meat by using an inert gas, such as nitrogen, prior to the application of CO₂. Depending on the size of the container or tote additional dwell time in the deoxygenation environment may be necessary to complete the deoxygenation process.

Deoxygenation is followed by replacement of at least a portion of that inert gas with carbon dioxide which prevents spoilage (under good refrigeration). This non-CO₂ deoxygenation process significantly enhances the color stabilization of red meat. Without being limited to any theory, it is believed that current MAP procedures employing an initial carbon dioxide flush with no deoxygenation pretreatment to maintain freshness of red meat contribute to the irreversible loss of the red color stability of the meat.

This invention modifies the deoxygenation process by first introducing an inert gas preferably containing no more than 5 % v/v carbon dioxide (e.g., nitrogen) to initiate the process. When oxygen levels are adequately reduced, at least a portion of the nitrogen is replaced with carbon dioxide while the oxygen concentration is maintained or continues to be reduced as the nitrogen is replaced.

Optionally, the red meat may be case ready packaged in a gas permeable material that allows gas exchange in and around the red meat such that the deoxygenation process and application of CO₂ are operative for the red meat in these packages inside a master tote having an inert gas atmosphere or carbon dioxide atmosphere. These gas permeable packages may be removed from the master tote allowing for the blooming of the red meat color in air with no additional manipulation of the case ready packaging.

In one embodiment of the disclosure is provided an improved process for preparing animal red meat for consumption which comprises at least the steps of slaughtering and butchering and optionally further processing the meat so as to be in a form suitable for storing and/or transporting in either bulk quantities or individual case ready packages in a carbon dioxide environment, wherein the improvement comprises inhibiting discoloration of the meat arising during storage and/or transportation by deoxygenating the meat during at least one step in the process in an inert gas prior to placing the meat in a carbon dioxide atmosphere for storing and/or transporting.

In another embodiment of the disclosure is provided an improved process for preparing animal red meat which comprises at least the steps of slaughtering and butchering and optionally further processing the meat so as to be in a form suitable for storing and/or transporting in either bulk quantities or individual case ready packages, wherein the improvement comprises
contacting the red meat in a nitrogen atmosphere containing no more than 5 % v/v carbon dioxide for a sufficient amount of time to deoxygenate during any of the steps of the process as described above;
contacting the red meat with a gaseous composition containing a sufficient amount of carbon dioxide under conditions wherein the discoloration of the red meat is inhibited; and
sealing the meat in a package that has a carbon dioxide atmosphere and limited oxygen permeability.

These and other aspects of the invention and disclosures are further described in the text that follows.

### DETAILED DESCRIPTION

### Definitions

It is to be noted that as used herein and in the claims, the singular forms "a," "an" and "the" include plural referents unless the context clearly dictates otherwise. Thus, for example, reference to "a fuel cell" includes one, two or more fuel cells, and so forth.

The term "comprising" is intended to mean that the articles and methods include the recited elements, but do not exclude others. "Consisting essentially of" when used to define articles and methods, shall mean excluding other elements of any essential significance to the intended use. "Consisting of" shall mean excluding more than trace amounts of other elements and substantial method steps.

The term "red meat" refers to a meat product comprising myoglobin or hemoglobin pigment. Examples of red meat include, but are not limited to, beef, pork, lamb, fish and other sea foods.

The term "freshness" refers to a state of a meat that displays characteristics, such as a color, texture and smell, as if it is just produced. Specifically, the bright red color of a red meat is an indication that the meat is fresh.

The term "inert gas" refers to a gas that is non-toxic and does not react with the red meat and is substantially free of oxygen and carbon dioxide. Examples of inert gas include nitrogen, argon, krypton, helium, nitric oxide, nitrous oxide, and xenon.

The term "inert gas atmosphere" refers to an atmosphere in a confined space, such as a sealed container, a meat package, a chamber or tube of a meat processing equipment that comprises an inert gas or a mixture of inert gases, and substantially free of oxygen and carbon dioxide.

The term "carbon dioxide atmosphere" refers to an atmosphere in a confined space, such as a sealed container, a meat package, a chamber or tube of a meat processing equipment that comprises carbon dioxide and optionally an inert gas or a mixture of inert gases, and substantially free of oxygen. In some embodiments, the concentration of carbon dioxide is at least 40 vol. % or at least 60 vol. %. In some embodiments, the carbon dioxide atmosphere contains 60 vol. % carbon dioxide and 40 vol. % nitrogen. In some embodiments, the carbon dioxide atmosphere comprises at least 90 vol. % carbon dioxide.

The term "carbon dioxide source" refers to a gas source comprising carbon dioxide and optionally an inert gas or a mixture of inert gases, and substantially free of oxygen. In some embodiments, the concentration of carbon dioxide is at least 40 vol. % or at least 60 vol. %. In some embodiments, the carbon dioxide source contains 60 vol. % carbon dioxide and 40 vol. % nitrogen. In some embodiments, the carbon dioxide source comprises at least 90 vol. % carbon dioxide.

The term "substantially free" when used to refer to an amount of oxygen or carbon dioxide refers to an amount that does not interfere with preservation of the red meat and the color of red meat, for example, an amount that is no more than 5 vol. %, 1 vol. %, 0.1 vol. %, or 0.01 vol. %. In some embodiments, substantially free of oxygen means that the oxygen concentration in the atmosphere is no more than 100, or 10 ppm.

The term "sealed container" refers to a container whose interior is isolated from ambient atmosphere without uncontrolled introduction and/or emission of gas, except gas that may diffuse into and/or out of the container through its wall material. A sealed container may comprise inlets and/or outlets which, when opened, allow controlled introduction and/or emission of gas to or from the container. Thus, a container is considered sealed for the purpose of this invention, if the architecture of the container controls the gas content within the container. In one embodiment, the sealed container does not allow gas exchange with outside of the container. In another embodiment, gas can be introduced into and/or released outside the sealed container under controlled conditions. Simply put, a sealed container is a container designed to prevent ambient atmospheric gas from entering into the container except by diffusion through the container (e.g. diffusion through a flexible plastic sheet). "Ambient atmosphere gas" or "ambient air" refers to gas in the general atmosphere typically comprising 78 % of nitrogen and 21 % of oxygen. A "container" can be a room, a warehouse, a cargo container, a package, a box, a carton, an enclosed space of a meat processing instrument, transport vessel, a tote, rigid container, physical rigid room or a tent, etc. The container can be portable or stationary.

The term "deoxygenation of a red meat" or "deoxygenate of a red meat" refers to reduction of the oxygen contained in and around the red meat.

The term "store", "storing" or "storage" refers to the act of keeping the red meat, after it is processed and before it is consumed, which includes storing the meat in a warehouse, a transportation vessel, or a store's shelf for sale, etc.

The term "retail cut" or "food service cut" refers to the meat portions that are suitable for sale to consumers in a retail store or for preparing meals for customers by a food service provider, such as a restaurant.

The term "case ready packages" refers to meat packages comprising retail cut or food service cut meat that are prepared by a central processing facility and delivered to retail stores which packages are ready for sale to the consumers without the need for further processing, such as cutting or repackaging.

### Methods

In one aspect of the disclosure, provided herein is a method to inhibit discoloration of red meat according to the claims.

In some embodiments, reduction of oxygen concentration is achieved without reducing the internal gaseous pressure of the container by more than 50 %. In some embodiments, reduction of oxygen concentration is achieved without reducing the internal gaseous pressure by more than 25 %. In some embodiments, reduction of oxygen concentration is achieved without reducing the internal gaseous pressure by more than 5 %. In some embodiments, reduction of oxygen concentration is achieved without reducing the internal gaseous pressure. This avoids excessive pressure differentiation between inside and outside of the container.

In some embodiments of the methods disclosed herein, in step (1), the oxygen concentration in the atmosphere of the container is reduced by operation of an oxygen removers, such as a fuel cell or an oxygen adsorber, which removes oxygen and are in gaseous communication with the container.

In some embodiments of the methods disclosed herein, in step (1), the oxygen concentration in the atmosphere of the container is reduced by replacing the oxygen or ambient air with an inert gas. In some embodiments, the inert gas comprises argon, helium, and/or nitrogen, and comprises no more than 1 vol. % of carbon dioxide. In some embodiments, the inert gas comprises no carbon dioxide. In some embodiments, the inert gas is selected from the group consisting of nitrogen, helium and argon. In some embodiments, the inert gas is nitrogen.

In some embodiments, the container comprises plumbing valves and fittings for use to flush the container with the inert gas to replace the oxygen in step (1) and/or to flush the container with carbon dioxide to replace the inert gas in step (2). The inert gas or carbon dioxide used to flush the container is introduced from an inlet, the gas in the container that is replaced by the inert gas or carbon dioxide flush is released through an outlet. After the flush, the inlet and outlet are closed to maintain the atmosphere obtained by the flush.

Gas flush and oxygen remover, such as fuel cell, operation can be done independently or in combination. In some embodiments, the container is flushed prior to turning on the oxygen remover, such as fuel cell. In some embodiments, the container is flushed while the oxygen remover, such as fuel cell is in operation to remove oxygen. The oxygen remover, such as fuel cell, may continue to remove oxygen during the transportation and/or storage. In some embodiments, the oxygen remover independently removes oxygen with no introduction of gas until deoxygenation is accomplished.

In some embodiments, the meat is added to the container before step (1) of the methods disclosed herein. In some embodiments, the meat is added to the container after the oxygen concentration is reduced or the portion of the atmosphere of the container is replaced with a nitrogen flush step (1) of the methods disclosed herein.

In some embodiments of the methods, in step (1), the oxygen concentration in the atmosphere of the sealed container is reduced to less than 5 vol. %, 4 vol. %, 3 vol. %, 2 vol. % or 1 vol. %. In some embodiments, the oxygen concentration in the atmosphere of the sealed container is reduced to less than 0.1 vol. %. In some embodiments, the oxygen concentration in the atmosphere of the sealed container is reduced to less than 0.01 vol. %. In a preferred embodiment, in step (1), an inert gas atmosphere is produced inside the sealed container, and in step (2), a carbon dioxide atmosphere is produced inside the sealed container.

In some embodiments of the methods, the meat is incubated in the atmosphere of step (1) for at least 1 hour before step (2) when the portion of the atmosphere is replaced with carbon dioxide. In some embodiments, the meat is incubated in the atmosphere of step (1) for at least 2 hours, 5 hours, 7 hours or at least 12 hours before step (2) when the portion of the atmosphere is replaced with carbon dioxide.

In some embodiments of the methods, in step (2), the oxygen concentration in the atmosphere of the sealed container is further reduced to less than 1500 ppm, by for example, replacing the oxygen with carbon dioxide and/or operation of the fuel cell.

In some embodiments of the methods, in step (2), at least 60 vol. percent of the atmosphere in the container is replaced with carbon dioxide or a low oxygen gas comprising carbon dioxide. In some embodiments, the low oxygen gas is a mixture of CO₂ and nitrogen or other inert gas, for example, a mixture of 60 vol. % CO₂ and 40 vol. % nitrogen. In one embodiment, the carbon dioxide or the low oxygen gas contains less than 100, or 10 ppm oxygen. In some embodiments of the methods, in step (2), at least 90 vol. percent of the atmosphere in the container is replaced with carbon dioxide. In some embodiments, the atmosphere of the container comprises at least 60 vol. percent carbon dioxide after completion of step (2). In some embodiments, the atmosphere of the container comprises at least 90 vol. percent carbon dioxide after completion of step (2).

In some embodiments, the period of time in step (1) is at least 1 hour. In some embodiments, the period of time in step (1) is at least 2 hours, 5 hours, 7 hours or at least 12 hours.

Preferably the gas used in the methods is acceptable by the relevant regulatory agencies, such as the U.S. Food and Drug Administration (FDA) "GRAS" (Generally Recognized as Safe) food grade carbon dioxide and nitrogen.

It should be understood that one source of oxygen in certain food stuffs is its release from hemoglobin. In such a case, carbon monoxide interacts with and binds more strongly to the hemoglobin than oxygen. Accordingly, for the purposes of this invention, carbon monoxide is considered not to be an inert gas.

In some embodiments of the methods, the container is a tote comprising a flexible, collapsible or expandable material with limited oxygen permeability which does not puncture when collapsing or expanding. The tote can withstand or volumetrically compensate for, the internal pressure loss such as carbon dioxide absorption by the meat, or pressure gain, such as reduction of barometric pressure during transport and/or shipment.

In some embodiments, the tote comprises an initial headspace that compensates for such absorption permitting the oxygen concentration in the tote to be maintained at a desired level and/or without creating a vacuum condition. In some embodiments, the initial headspace occupies at least 30 or at least 40 volume percent of the tote. In some embodiments, the initial headspace occupies 50 volume percent of the tote. In one embodiment, the headspace is or at least 69 vol. percent of the tote. In some embodiments, the initial headspace is from 30% to 95 % the internal volume of the tote. In other embodiments, the initial headspace is from 35 % to 40 % of the internal volume of the tote, or alternatively, the initial headspace is 30 % to 35 % of the internal volume of the tote, or alternatively, the initial headspace is 35 % of the internal volume of the tote.

In some embodiments, the vertical architecture of the tote facilitates minimizing horizontal space requirements for shipping the maximum number of pallets side-by-side. Embodiments that spread the headspace out horizontally may not be as economically viable at a large scale in addition to not enjoying the leak resistance as long as the headspace remains positive. In certain embodiments, no more than 20 % of the expansion of the tote is in the horizontal direction, with the remainder of the gaseous expansion being in the vertical direction thus creating the "head pressure" and headspace height of the tote. The tote is configured to expand in a vertical manner creating an initial "head pressure" after the carbon dioxide flush. Initial tote head pressures can range from 0.1 to 1.0 inches of water column or more above atmospheric pressure. The flexible tote can be made more flexible in the vertical direction than in the horizontal by conventional methods, such as using more flexible material in the vertical direction.

In some embodiments, the totes are able to accommodate a sufficient headspace such that the tote would require no continuous oxygen monitoring and/ further periodic gas flushing after the atmosphere of the tote is replaced with a sufficient amount of carbon dioxide in step (2). In some embodiment, the gas flushes with carbon dioxide in step (2) can proceed periodically for up to 72 hours, for example, 60 hours, or alternatively, 48 hours, or alternatively, 24 hours, after step (1). Alternatively, the initial gas flushes can proceed during the first 72 hours or less, or alternatively, the first 60 hours, or alternatively, the first 48 hours, or alternatively, the first 24 hours, after start of step (2).

In some embodiments, the container is a rigid room or container. When the container is a rigid room or container, after step (2), an inert gas, such as nitrogen, or carbon dioxide can be introduced continuously or intermittently as needed to the room or container to compensate for gas absorption by the meat and keep the oxygen concentration at a desired low level until the meat is released for distribution. Alternatively, an oxygen remover may be operated continuously or intermittently to keep the oxygen concentration at a desired low level.

In some embodiment, the meat is transferred to a different container having a carbon dioxide atmosphere after it is deoxygenated, i.e., the container in step (1) is different from the container in step (2). The meat is stored and/or transported in the second container.

In some embodiments, after deoxygenation and treatment with carbon dioxide, the meat is further packaged in a smaller package, such as a case ready package, having a carbon dioxide atmosphere and limited oxygen permeability, in which it is transported and/or stored.

In some embodiments, the red meat may be case ready packaged, for example, prior to deoxygenation, in a gas permeable material that allows gas exchange in and around the red meat such that the deoxygenation process and application of CO₂ are operative for the red meat in these packages inside a master tote having an inert gas atmosphere or carbon dioxide atmosphere. Preferably, the case ready package is in the inert gas atmosphere for a sufficient amount of time to allow deoxygenation in and around red meat, such as at least 1 hour, 2 hours, 3 hours, 6 hours, 12 hours, or one day. After deoxygenation, the case ready package is placed in the carbon dioxide atmosphere for transportation and/or storage. These gas permeable packages may be removed from the master tote allowing for the blooming of the red meat color in air with no additional manipulation of the case ready packaging. Gas permeable materials suitable for meat packaging are known in the art, for example, cellulose, polyethylene, polypropylene, microperforated materials/films, etc.

In some embodiments of the methods, the meat is red meat. In some embodiments, the meat is beef, lamb or pork. In some embodiments, the meat is fish comprising the myoglobin pigment or hemoglobin pigment. In some embodiments, the meat is tilapia. In some embodiments, the meat is tuna, mackerel and other seafoods.

The methods can be used in the transporting or storing the meat in the carbon dioxide atmosphere in either the initial container, or a different container, such as a sealed case ready package, for a time periods in excess of 100 days. In some embodiments of the methods, the transportation and/or storage is for a time period of at least 3 days. In some embodiments, the transportation and/or storage is for a time period of at least 5, 10, 15, 30, or 45 days.

Oxygen may accumulate in the container during transportation and/or storage by, for example, diffusion into the container through the material of limited oxygen permeability or at the seal of the container. Oxygen may also be released by the meat within the container or from containers in which the meat is packaged. In some embodiments, the oxygen concentration of the atmosphere of the containers is maintained at or below 1500 ppm during the transportation and/or storage by, for example, operation of the one or more fuel cells or additional flushes with a gas comprising an inert gas and/or carbon dioxide. The removal of oxygen can be performed continuous or periodically. If performed periodically, the removal of oxygen can be pre-programmed according to a schedule or triggered by a preset oxygen concentration in the container.

### Example

Tilapia fillets were stored in the following example. Tilapia fillets contain "blood lines" with a bright red color due to the presence of myoglobin pigment. If upon storage, the myoglobin becomes irreversibly discolored, the blood lines of the tilapia fillets would lose the bright red color and the fish would not appear fresh.

To each of the two containers, Container 1 and Container 2, was placed 1 metric ton (1,000 kg) of fresh chilled tilapia fillets packaged in 60 boxes per container (and average of 112 fillets per box) at 32 °F (0 °C) in Canas, Costa Rica. Container 2 was initially flushed with nitrogen with simultaneous fuel cell operation to remove oxygen. Container 1 was initially flushed with carbon dioxide with simultaneous fuel cell operation to remove oxygen. The oxygen concentration in both containers reached below 0.5 % at the end of the initial flush. The containers were kept for 11 to 12 hours at which time the oxygen concentration rose to just under 1 % in both containers. Both containers were then flushed with carbon dioxide until the oxygen concentration was below 0.1 %. The containers were held for 30 days. At the end of the 30 day period, the containers were opened and the tilapia fillets inside the containers were observed for freshness. The tilapia fillets in Container 2 had bright red blood lines and were indistinguishable in all aspects from tilapia fillets that were just prepared. The blood lines of the tilapia fillets in Container 1 became a brown color which made the fish look unfresh.

## Claims

1. A method to inhibit discoloration of red meat, which method comprises:
(1) reducing the oxygen concentration in the atmosphere of a sealed container containing red meat to no more than 5 % v/v to obtain an inert gas atmosphere by replacing at least a portion of the atmosphere in the sealed container with a nitrogen flush;
(2) after the nitrogen flush, introducing at least 40 vol. % exogenous carbon dioxide into the container while retaining or further reducing the oxygen concentration in the atmosphere of the container to less than 1500 ppm by operation of a fuel cell so as to inhibit the discoloration of the red meat; and
(3) optionally transferring the red meat into a package with limited gas permeability;
wherein the atmosphere of the container comprises an inert gas atmosphere which excludes carbon monoxide and comprises at least 90 vol% carbon dioxide after completion of step (2).

2. The method of claim 1, further comprising incubating the red meat in the inert gas atmosphere for a period sufficient to deoxygenate the red meat.

3. The method of claim 1, wherein the red meat is tilapia.

## Patentansprüche

1. Verfahren zum Verhindern von Verfärbung von rotem Fleisch, wobei das Verfahren Folgendes umfasst:
(1) Reduzieren des Sauerstoffgehalts der Atmosphäre eines abgedichteten Behälters, der rotes Fleisch zu nicht mehr als 5 % v/v enthält, um durch Ersetzen zumindest eines Teils der Atmosphäre in dem abgedichteten Behälter durch eine Stickstoffspülung eine Inertgasatmosphäre zu schaffen;
(2) nach der Stickstoffspülung Einbringen von mindestens 40 Vol.-% exogenem Kohlendioxid in den Behälter, während der Sauerstoffgehalt in der Atmosphäre des Behälters durch Betreiben einer Brennstoffzelle beibehalten oder auf weniger als 1500 ppm reduziert wird, sodass die Verfärbung des roten Fleischs verhindert wird; und
(3) optional Übertragen des roten Fleischs in eine Verpackung mit begrenzter Gasdurchlässigkeit;
wobei die Atmosphäre des Behälters eine Inertgasatmosphäre umfasst, die nach Abschluss von Schritt (2) kein Kohlenmonoxid beinhaltet und mindestens 90 Vol.-% Kohlendioxid umfasst.

2. Verfahren nach Anspruch 1, ferner umfassend das Inkubieren des roten Fleischs in der Inertgasatmosphäre über einen Zeitraum hinweg, der ausreicht, um dem roten Fleisch den Sauerstoff zu entziehen.

3. Verfahren nach Anspruch 1, wobei es sich bei dem roten Fleisch um Buntbarsch handelt.

## Revendications

1. Procédé pour inhiber la décoloration de la viande rouge, ledit procédé comprenant:
(1) la réduction de la concentration en oxygène dans l'atmosphère d'un récipient hermétiquement fermé contenant de la viande rouge à pas plus de 5 % v/v pour obtenir une atmosphère de gaz inerte en remplaçant au moins une partie de l'atmosphère dans le récipient hermétiquement fermé par un rinçage à l'azote;
(2) après le rinçage à l'azote, l'introduction d'au moins 40 % en volume de dioxyde de carbone exogène dans le récipient tout en conservant ou réduisant encore la concentration en oxygène dans l'atmosphère du récipient à moins de 1 500 ppm par l'actionnement d'une pile à combustible de façon à inhiber la décoloration de la viande rouge; et
(3) éventuellement, le transfert de la viande rouge dans un emballage ayant une perméabilité aux gaz limitée;
dans lequel l'atmosphère du récipient comprend une atmosphère de gaz inerte qui exclut le monoxyde de carbone et comprend au moins 90 % en volume de dioxyde de carbone après la réalisation de l'étape (2).

2. Procédé selon la revendication 1, comprenant en outre l'incubation de la viande rouge dans l'atmosphère de gaz inerte pendant une durée suffisante pour désoxygéner la viande rouge.

3. Procédé selon la revendication 1, dans lequel la viande rouge est le tilapia.
